# EUROPÄISCHE PATENTSCHRIFT

(11) **EP 3 022 807 B1**
(45) Veröffentlichungstag und Bekanntmachung des Hinweises auf die Patenterteilung: **21.11.2018**
(21) Anmeldenummer: 14750141.5
(22) Anmeldetag: 10.07.2014
(51) Int. Cl.: H01R 13/627, H01R 13/639, G02B 6/38, F16L 37/08

(54) **VERRIEGELUNGSVORRICHTUNG FÜR STECKVERBINDER**
LOCKING APPARATUS FOR PLUG CONNECTORS
DISPOSITIF DE VERROUILLAGE DE CONNECTEURS ENFICHABLES

(30) Priorität: 18.07.2013 DE 202013103217 U
(43) Veröffentlichungstag der Anmeldung: 25.05.2016
(73) Patentinhaber: HARTING Electronics GmbH, 32339 Espelkamp (DE)
(72) Erfinder: FRIESEN, Heinrich, 32429 Minden (DE)
(86) Internationale Anmeldenummer: PCT/DE2014/100243
(87) Internationale Veröffentlichungsnummer: WO 2015/007268

(56) Entgegenhaltungen:
- EP-A2- 1 898 498
- US-A1- 2007 026 703
- US-A1- 2010 330 835

## Beschreibung

Die Erfindung betrifft eine Verriegelungsvorrichtung für Steckverbinder nach dem unabhängigen Anspruch 1.

Derartige Verriegelungsvorrichtungen werden benötigt, um zwei Steckverbinder miteinander mechanisch zu verrasten. Dabei kann es sich um elektrische, pneumatische, optische oder hydraulische Steckverbinder handeln. Jede Art von Steckverbinder muss sicherstellen, dass die hergestellte Verbindung mechanisch gegen eine unerwünschte Trennung der Verbindung gesichert ist.

Zu diesem Zweck gibt es aus dem Stand der Technik eine Vielzahl von Verriegelungsvorrichtungen, welche eine mechanische, wieder lösbare Verbindung von zwei Steckverbindern sicherstellen.

Die EP 1 898 498 A2 stellt einen elektrischen Steckverbinder vor, welcher aus zwei Hälften und einem federdrahtartigem Clipelement besteht. Das Clipelement sichert die Verbindung zwischen den beiden Steckerhälften.

Eine im Stand der Technik gerne verwendete Art von Verriegelungsvorrichtungen ist die sogenannten "Push-Pull" Ver- und Entriegelung. Diese zeichnen sich durch ihre einfache Handhabung aus. Die Steckverbindung wird durch einfaches Drücken (Push) verriegelt und durch einfaches Ziehen (Pull) entriegelt.

Üblicher Weise verfügen derartige Push-Pull-Steckverbinder über eine Betätigungsmittel, welches hülsenartig den Steckverbinder umgibt. So wird gleichermaßen ein Gehäuse des Steckverbinders gebildet, wie ein Betätigungsmittel um die Ver- und Entriegelung zu betätigen.

Nachteilig wirkt sich bei derartigen Steckverbindern mit Push-Pull-Mechaniken aus, dass diese jeweils für eine spezielle Ausführungsform entwickelt und nur mit dieser kompatibel sind. Die Herstellung ist daher meist sehr aufwändig auf Grund der vielen Einzelteile aus welchen ein solcher Steckverbinder hergestellt wird.

Dieser hohe Herstellungsaufwand sowie die Anzahl der Einzelteile wirkt sich dabei meist negativ auf die Herstellungskosten derartiger Steckverbinder aus.

### Aufgabenstellung

Die Aufgabe der Erfindung besteht daher darin einen Push-Pull-Steckverbinder vorzustellen, welcher einfach, aus wenigen Einzelteilen und so kostengünstig herzustellen ist.

Die Aufgabe wird gelöst durch eine Verriegelungsvorrichtung für Steckverbinder nach dem unabhängigen Anspruch 1.

Vorteilhafte Ausgestaltungen der Erfindung sind in den Unteransprüchen angegeben.

Die Erfindung betrifft eine Verriegelungsvorrichtung für Steckverbinder. Dabei wird die Verriegelungsvorrichtung aus einer ersten Verriegelungshälfte sowie einer zweiten Verriegelungshälfte gebildet. Die beiden Verriegelungshälften sind zweckmäßig jeweils an einem Steckverbinder vorgesehen und miteinander zusammenfügbar und verriegelbar.

Durch die Verriegelung der beiden Verriegelungshälften wird eine sichere, mechanische Kontaktierung der beiden zu verbindenden Steckverbinder gewährleistet.

Die erste Verriegelungshälfte besteht aus einer äußeren Hülse, sowie einer inneren Hülse. Die vorzugsweise runden Hülsen sind linear in Steckrichtung zueinander verschiebbar. Vorzugsweise kann die äußere Hülse gegen die Steckrichtung auf der inneren Hülse um einen kurzen Bereich von ca. 1 bis 10 mm verschoben werden.

Die zweite Verriegelungshälfte wird aus einer weiteren Hülse gebildet. Die weitere Hülse der zweiten Verriegelungshälfte entspricht zweckmäßig der gleichen Form wie die beiden Hülsen der ersten Verriegelungshälfte und ist von ihrer Dimensionierung her kleiner als die innere Hülse. So kann die weitere Hülse zur Kontaktierung der Verriegelungsvorrichtung in die innere Hülse der ersten Verriegelungshälfte eingeschoben werden.

Um nicht nur eine Kontaktierung, sondern auch eine Verrastung der Verriegelungshälften miteinander sicherzustellen, verfügt die erste Verriegelungshälfte des Weiteren über zumindest ein Rastmittel, welches auf die weitere Hülse der zweiten Verriegelungshälfte einwirkt.

Das Rastmittel ist zweckmäßig aus einem federnden Material, zum Beispiel Metall oder Kunststoff, hergestellt und zwischen der äußeren und der inneren Hülse angeordnet. Eine Rastöffnung in der inneren Hülse ermöglicht es, dass das Rastmittel zumindest bereichsweise auf die weitere Hülse einwirkt und so eine Verriegelung zwischen der ersten Verriegelungshälfte und der zweiten Verriegelungshälfte ermöglicht.

Das federnde Rastmittel ist ein im Wesentlichen U-förmig ausgebildetes Element. Es wird aus zwei Schenkeln, sowie einer Basis gebildet, wobei die Schenkel jeweils mit der Basis über einen abgewinkelten Bereich verbunden sind. Besonders vorteilhaft ist, das Rastmittel aus einem Draht zu bilden. Je nach Stärke und Materialeigenschaften des Drahtes kann so die Verriegelungskraft der Verriegelungsvorrichtung eingestellt werden.

Vorteilhaft ist das Rastmittel so zwischen der inneren und der äußeren Hülse angeordnet, dass die Schenkel in etwa parallel zu Steckrichtung verlaufen und die Basis des Rastmittels in etwa quer zur Steckrichtung ausgerichtet ist. Durch die Rastöffnung in der inneren Hülse kann so die Basis des Rastmittels hindurch auf die weiter Hülse einwirken.

Dabei ist es zweckmäßig, die Rastöffnung als Schlitz in die innere Hülse einzubringen. Durch eine ebenfalls in etwa quer zur Steckrichtung gerichtete Ausrichtung der Rastöffnung ist ein Hindurchführer der Basis des Rastmittels möglich.

Um eine sichere Verrastung zwischen dem Rastmittel und der weiteren Hülse der zweiten Verriegelungshälfte zu gewährleisten, ist in der weiteren Hülse eine Rastausnehmung vorgesehen, in welche das Rastmittel eingreifen kann.

Vorzugsweise ist auch die Rastausnehmung ebenfalls als Schlitz oder Nut ausgebildet. Eine sinnvolle Ausrichtung dieser zur Steckrichtung, dass die Basis des Rastmittels in diese einrasten kann ist vorteilhaft. Dabei kann es sich lediglich um eine kurze Nut oder einen Schlitz handeln.

Jedoch ist auch eine Ausführung denkbar, in welcher der Schlitz oder die Nut sich über den gesamten Umfang der weiteren Hülse erstreckt. Bei einer solchen, umlaufenden Rastausnehmung ist besonders vorteilhaft, dass die Orientierung der beiden Verriegelungshälften zueinander nicht relevant ist beim Steckvorgang.

In einer besonderen Ausführungsform ist das Rastmittel der Form der inneren Hülse angepasst. Dies bedeutet hauptsächlich, dass vorrangig die Basis des Rastmittels an die Form der inneren Hülse angepasst ist um möglichst platzsparend zwischen der inneren und der äußeren Hülse angeordnet zu werden.

So wäre es beispielsweise denkbar, bei einer runden inneren Hülse die Basis des Rastmittels ebenfalls mit einem Bogen, oder mehreren Abwinklungen zu versehen.

Je nach Ausführungsform sind verschiedene Möglichkeiten der Fixierung des Rastmittels denkbar. In einer Ausführungsform sind die freien Schenkel der Rastmittel an der inneren Hülse befestigt. Dazu können diese einfach in vorgesehen Löcher in der inneren Hülse gesteckt werden.

Eine weitere zweckmäßige Ausführungsform sieht es vor, die Schenkel zweier vorgesehener Rastmittel miteinander zu verbinden. So können die ersten der Schenkel mit einem jeweils zweiten Schenkel verbunden werden. Eine einteilige Ausführung mehrerer Rastmittel kann so realisiert werden. Diese miteinander verbundenen Rastmittel werden um die innere Hülse gelegt, halten sich gegenseitig und müssen so nicht weiter an der inneren Hülse fixiert werden. Die Ausführungsformen wo die Schenkel zweier vorgesehener Rastmittel nicht verbunden sind sind nicht teil der Erfindung.

Um eine Entriegelung der zwei Verriegelungshälften zu ermöglichen, verfügt die äußere Hülse über zumindest eine, vorzugsweise zwei Paar Keilflächen. Diese sind an der Innenseite der äußeren Hülse so angeordnet, dass bei Verschieben der äußeren Hülse zur inneren Hülse die Keilflächen auf das oder die Rastmittel einwirken. Dabei werden die Rastmittel flexibel verformt, so dass die Basis der Rastmittel aus dem Eingriff der weiteren Hülse gelöst wird. So ist ein Lösen der Verbindung zwischen den zwei Verriegelungshälften möglich.

In einer vorteilhaften Ausführung sind die Keilflächen paarweise angeordnet und wirken zwischen zwei Rastmittel auf deren gebogene Bereiche zwischen Schenkel und Basis ein. Durch eine besondere Ausgestaltung der gebogenen Bereiche der Rastmittel kann ein besonders vorteilhafter, mechanischer Wirkzusammenhang zwischen Keilflächen und Rastmitteln erzeug werden.

Dafür wird einerseits im gebogenen Bereich der Rastmittel eine Art "Ohr" erzeugt, so dass die Rastmittel im gebogenen Bereich breiter ausgeführt sind, als im Bereich der freien Schenkelenden.

Zum anderen ist dazu eine besondere Ausrichtung der Keilflächen vorteilhaft. Dazu sollten die Keilflächen einen Winkel zwischen 0 und 90 Grad zur Steckrichtung bilden. Besonders vorteilhaft ist ein Winkel zwischen 20 und 60 Grad, insbesondere zwischen 30 und 50 Grad zur Steckrichtung.

### Ausführungsbeispiel

Ein Ausführungsbeispiel der Erfindung ist in den Zeichnungen dargestellt und wird im Folgenden näher erläutert. Es zeigen:
- Fig. 1: eine Schnittdarstellung einer Verriegelungsvorrichtung;
- Fig. 2: eine Explosionsansicht einer ersten Verriegelungshälfte;
- Fig. 3: eine innere Hülse mit Rastmitteln;
- Fig. 4: zwei Rastmittel;und
- Fig. 5: einen Teilschnitt einer ersten Verriegelungshälfte.

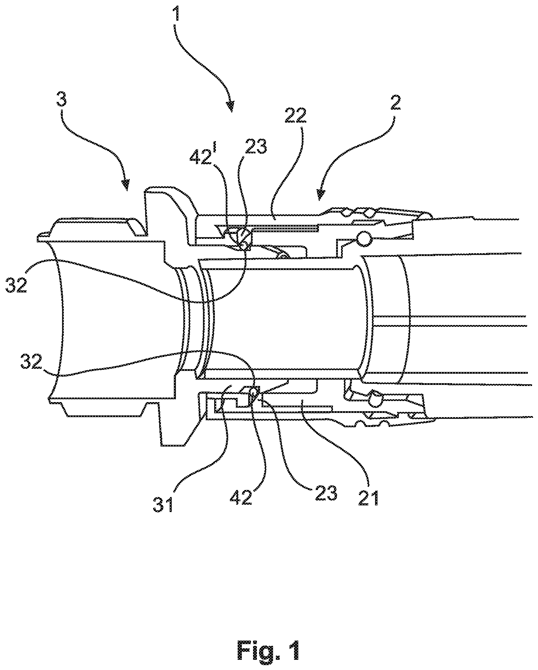

Die Figur 1 zeigt eine Verriegelungsvorrichtung 1 bestehend aus einer ersten Verriegelungshälfte 2 und einer zweiten Verriegelungshälfte 3. Die zweite Verriegelungshälfte 3 wird neben einem links dargestellten Anschlussbereich für einen Steckverbinder aus einer, in die erste Verriegelungshälfte 2 eingeschobenen Hülse 31 gebildet.

Die Hülse 31 weist an ihrer Steckseite eine Abschrägung auf, um ein Einstecken in die erste Verriegelungshälfte 2 zu erleichtern. Daneben ist an der Hülse 31 umlaufend eine Rausausnehmung 32 vorgesehen, welche zum Einrasten eines Rastmittels 4 geeignet ist.

Die erste Verriegelungshälfte 2 besteht im Wesentlichen aus zwei ineinander gesteckte Hülse. Eine innere Hülse 21, sowie eine äußere Hülse 22. Wobei die äußere Hülse 22 axial entgegen der Steckrichtung S auf der inneren Hülse 21 verschiebbar angeordnet ist.

Erkennbar in der Figur 1 ist zudem, dass die erste Verriegelungshälfte 2 mittels eines Sprengrings auf einem Steckverbinder angeordnet ist.

Zur Verriegelung der ersten Verriegelungshälfte 2 mit der zweiten Verriegelungshälfte 3 ist ein Rastmittel 4 vorgesehen. Vom Rastmittel 4 ist in dieser Darstellung lediglich der Querschnitt der Basis 42 zu erkennen. Das Rastmittel 4 greift mit dieser Basis 42 durch eine Rastöffnung 23 der inneren Hülse 21 und kann so in die Rausausnehmung 32 der weiteren Hülse 31 der zweite Verriegelungshälfte 3 eingreifen.

Um die Verriegelung der ersten und zweiten Verriegelungshälfte 2, 3 zu lösen, muss lediglich die Basis 42 des Rastmittels 4 aus der Rastausnehmung 32 gehoben werden.

In dem dargestellten Ausführungsbeispiel verfügt die Verriegelungsvorsichtung 1 über zwei Rastmittel 4, 4'. Im unteren Bereich der Verriegelungsvorrichtung 1 ist daher die Basis 42 des ersten Rastmittels 4 vorgesehen, im oberen Bereich die Basis 42' des zweiten Rastmittels.

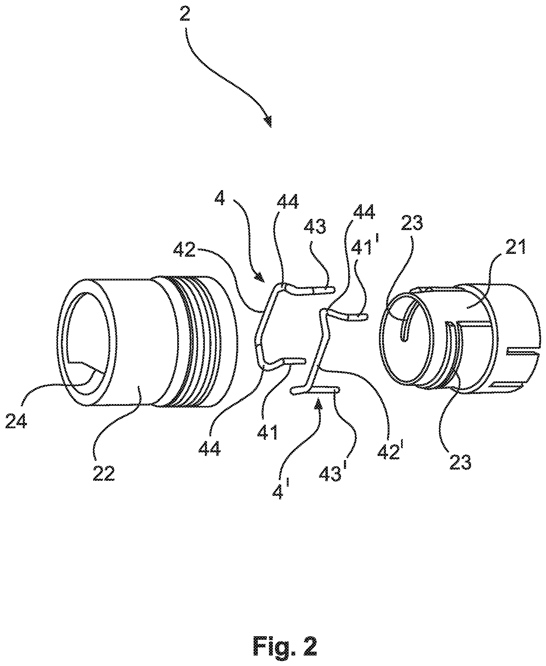

In der Figur 2 ist eine erste Verriegelungshälfte 2 in einer Explosionsansicht dargestellt. Die erste Verriegelungshälfte 2 besteht aus einer inneren Hülse 21, hier rechts dargestellt, und einer äußeren Hülse 22, hier links dargestellt.

Die innere Hülse 21 ist dafür vorgesehen auf einen Steckverbinder montiert zu werden. Dies kann sowohl - wie auch schon in Figur 1 dargestellt - mittels eines Sprengrings vorgesehen sein, als auch andere Möglichkeiten wie mittels einer Schraube, Kleben, Vernieten oder Aufpressen realisiert werden. Auch ist eine, mit einem Steckverbindergehäuse einteilig ausgeführte Variante denkbar.

Im mittleren Bereich der Figur 2 sind zwei Rastmittel 4, 4' dargestellt. Diese sind in diesem Ausführungsbeispiel, das nicht Teil der Erfindung ist, zur Befestigung an der inneren Hülse 21 vorgesehen. Dazu werden freie Schenkel 41, 41', 43, 43' in Löcher in der inneren Hülse 21 eingesetzt und fixiert.

Die Schenkel 41, 41', 43, 43' der Rastmittel 4, 4' werden jeweils durch die Basis 42, 42' verbunden. Diese ist vorgesehen um in die Rastöffnung 23 der inneren Hülse 21 eingesetzt zu werden. Dadurch ist es möglich, dass die Basis 42, 42' der Rastmittel 4, 4' auf eine eingesteckte, zweite Verriegelungshälfte 3 im Inneren der inneren Hülse 21 einwirkt.

Die im linken Bereich dargestellte äußere Hülse 22 umgibt die innere Hülse 21 und die Rastmittel 4, 4'. Die äußere Hülse 22 ist dabei axial in und gegen Steckrichtung S auf der inneren Hülse 21 verschiebbar. Dabei können Keilflächen 24, die auf der Innenseite der äußeren Hülse 22 angeordnet sind, auf die Rastmittel 4, 4' einwirken und die Verriegelung zwischen erster Verriegelungshälfte 2 und zweiter Verriegelungshälfte 3 lösen.

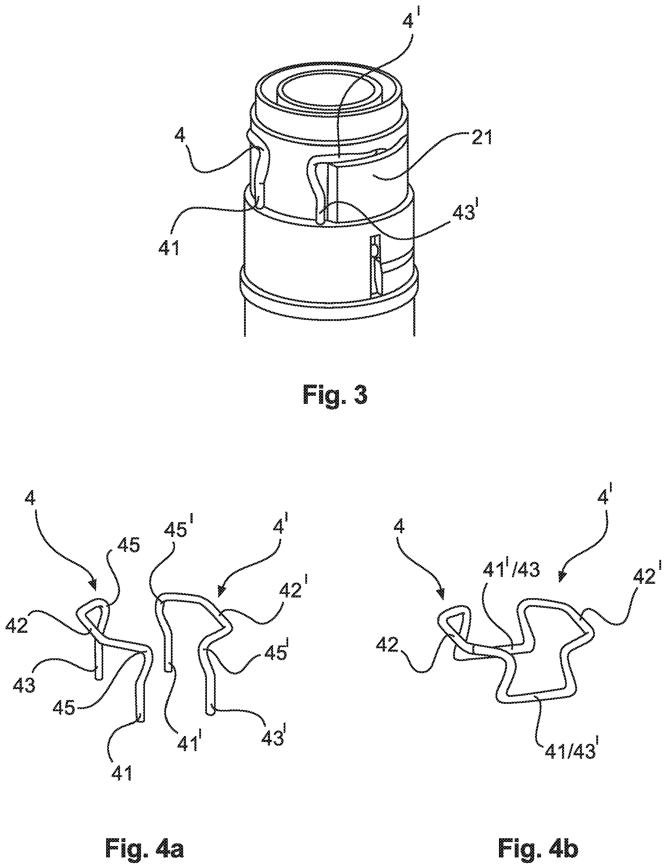

Die Rastmittel 4, 4' der Figur 2 sind in Figur 4a noch einmal im Detail dargestellt. Die Rastmittel 4 werden jeweils aus zwei Schenkeln 41, 43 gebildet, wobei die Schenkel 41, 43 über eine Basis 42 verbunden sind. Dabei sind die Schenkel 41, 43 in etwa parallel ausgerichtet und die Basis 42 in etwa quer dazu, dass sich eine U-Form ergibt.

In der dargestellten Ausführung, die nicht Teil der Erfindung ist, ist die Basis 42 der Rastmittel 4 an zwei Positionen symmetrisch abgewinkelt um eine bessere Anpassung an die runde innere Hülse 21 zu ermöglichen.

Der Übergang zwischen Schenkeln 41, 43 und Basis 42 wird jeweils durch einen abgewinkelten Bereich 44 gebildet. In der speziellen, dargestellten Ausführungsform sind die abgewinkelten Bereiche 44 breiter ausgebildet als die Schenkel 41, 43 zueinander. Die Rastmittel bilden in dieser Ausführung im Bereich der breiter ausgebildeten, abgewinkelten Bereiche 44 einen ausladenden Bogen 45.

Die ausladenden Bögen 45 sind für eine vorteilhafte Entriegelung vorgesehen. Dazu können die Rastmittel 4 an den Bögen 45 besser durch die Keilflächen 24 der äußeren Hülse 22 betätigt werden. Die genauere Funktionsweise wird in Figur 6 näher beschrieben.

In der Figur 4b ist die Ausführungsform der Rastmittel 4, 4' dargestellt. In dieser werden die Rastmittel 4, 4' nicht an der inneren Hülse 21 befestigt, sondern zwei Rastmittel 4, 4' miteinander einteilig ausgeführt. Zu diesem Zweck ist jeweils ein Schenkel 41, 41' mit einem Schenkel 43, 43' des anderen Rastmittels 4, 4' verbunden.

Der so gebildete Rastring 4, 4' kann um die innere Hülse 21 gelegt werden und bedarf keiner weiteren Fixierung an der inneren Hülse 21. Die auftretenden Federkräfte der Rastmittel 4, 4' werden über das jeweils gegenüberliegende Rastmittel 4, 4' kompensiert.

Die Figur 3 zeigt eine innere Hülse 21 mit zwei daran befestigten Rastmitteln 4, 4'. Die innere Hülse 21 ist auf einem schematisch dargestellten Steckverbinder befestigt.

Die Schenkel 41, 43' - sowie die nicht sichtbaren Schenkel 41', 43 - sind in vorgesehene Löcher in der inneren Hülse 21 eingesetzt und fixiert. Die Schenkel 41, 41', 43, 43' sind grob axial ausgerichtet und können flexibel ausgelenkt werden. Die Basis 42, 42' der Rastmittel 4, 4' sind in die Rastöffnungen 23 eingesetzt und reichen bis auf die Innenseite der inneren Hülse 21. So können die Rastmittel 4, 4' mittels ihrer Basis 42, 42' in eine einzufügende zweite Verriegelungshälfte 3 eingreifen.

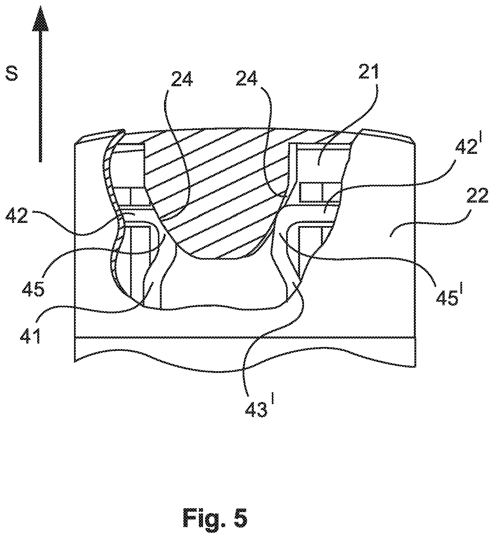

Die Funktionsweise der ersten Verriegelungshälfte 2 ist in einem Teilschnitt in der Figur 5 näher erkennbar. Gezeigt ist die aufgeschnittene äußere Hülse 22 der ersten Verriegelungshälfte 2. Zwischen der inneren Hülse 21 und der äußeren Hülse 22 sind zwei Rastmittel 4, 4' angeordnet.

An der Innenseite der äußeren Hülse 22 zwei Keilflächen 24 vorgesehen. Die Keilflächen 24 sind jeweils einem der ausladenden Bögen 45, 45' der Rastmittel zugeordnet. Durch verschieben der äußeren Hülse 22 entgegen der Steckrichtung S werden die Rastmittel 4, 4' durch die Keilflächen 24 radial nach außen bewegt. Die vorteilhafte Ausformung der ausladenden Bögen 45, 45' unterstützt diese Bewegung.

Durch die Federkraft der Rastmittel 4, 4' wird die äußere Hülse 22 nach Betätigung wieder selbstständig in Steckrichtung S zurückgesetzt. Dazu ist es besonders vorteilhaft, die Rastmittel 4, 4' aus einem Material mit guter Federwirkung herzustellen. Hier wäre ein entsprechender Kunststoff oder Metall zweckmäßig.

Für eine einfache Kontaktierung und Verrieglung der zwei Verrieglungshälften 2, 3 ist der weiteren Hülse 31 im vorderen Bereich eine Fase über den Umfang angeformt. Über diese als Rampe dienende Fase kann die Basis 42, 42' der Rastmittel 4, 4' angehoben werden bis diese in die Rastausnehmungen 32 verriegeln.

## Patentansprüche

1. Verriegelungsvorrichtung (1) für Steckverbinder, bestehend aus zumindest einer ersten Verriegelungshälfte (2) und zumindest einer zweiten Verriegelungshälfte (3),
wobei die erste Verriegelungshälfte (2) aus einer inneren Hülse (21) und einer äußeren Hülse (22) gebildet wird,
wobei die äußere Hülse (22) linear entgegen einer Steckrichtung (S) zur inneren Hülse (21) verschiebbar ist,
wobei die zweite Verriegelungshälfte (3) aus einer weiteren Hülse (31) gebildet wird, welche in die inneren Hülse (21) der ersten Verriegelungshälfte (2) einsteckbar ist, und
wobei der ersten Verriegelungshälfte (2) zumindest ein Rastmittel (4) zugeordnet ist, welches durch zumindest eine Rastöffnung (23) in der inneren Hülse (21) auf eine eingesteckte Hülse (31) einwirkt,
**dadurch gekennzeichnet, dass**
das Rastmittel (4) im Wesentlichen eine U-Form aufweist, welche aus einem ersten Schenkeln (41), einer Basis (42) und einem zweiten Schenkel (43) gebildet wird, wobei der erste Schenkel (41) sowie der zweite Schenkel (43) jeweils mit der Basis (42) über einen abgewinkelten Bereich (44) verbunden sind,
dass die ersten Schenkel (41,41') von zumindest zwei Rastmitteln (4, 4') mit dem jeweils zweiten Schenkel (43, 43') eines anderen Rastmittels (4, 4') verbunden sind, und dass die Basis (42, 42') der Rastmittel (4, 4') in die Rastöffnung (23) einsetzbar und bis auf die Innenseite der inneren Hülse (21) reichend ausgebildet sind, wodurch die Rastmittel (4, 4') in die zweite Verriegelungshälfte (3) eingreifen können, und dass die äußere Hülse (22) an der Innenseite angeformte Keilflächen (24) aufweist, wobei die Keilflächen (24) in einem Winkel zwischen 0 und 90 Grad zur Steckrichtung (S) angeordnet sind, dass die Keilflächen (24) auf die Rastmittel (4, 4') einwirken und dadurch die Verriegelung zwischen der ersten Verriegelungshälfte (2) und der zweiten Verriegelungshälfte (3) lösbar ist, dass die Keilflächen (24) jeweils einem ausladenden Bogen (45, 45') der Rastmittel (4, 4') zuordbar sind,
dass die Rastmittel (4, 4') durch die Keilflächen (24) durch Verschieben der äußeren Hülse (22) entgegen der Steckrichtung (S) nach außen bewegbar sind.

2. Verriegelungsvorrichtung (1) nach Anspruch 1,
**dadurch gekennzeichnet, dass**
die Basis (42 42') der Rastmittel (4, 4') in eine Rastausnehmung (32) in der Hülse (31) eingreifen.

3. Verriegelungsvorrichtung (1) nach Anspruch 2,
**dadurch gekennzeichnet, dass**
die Rastausnehmung (32) und die Basis (42, 42') quer zur Steckrichtung (S) ausgerichtet sind.

4. Verriegelungsvorrichtung (1) nach einem der Ansprüche 1 bis 3,
**dadurch gekennzeichnet, dass**
die Rastmittel (4, 4') an die Form der inneren Hülse (21) angepasst sind.

5. Verriegelungsvorrichtung (1) nach einem der Ansprüche 1 bis 4, **dadurch gekennzeichnet, dass** die ersten Schenkel (41, 41') und die zweiten Schenkel (43, 43') an der inneren Hülse (21) fixiert sind.

6. Verriegelungsvorrichtung (1) nach einem der vorstehenden Ansprüche,
**dadurch gekennzeichnet, dass**
die ersten Schenkel (41, 41') der zumindest zwei Rastmittel (4, 4') mit dem jeweils zweiten Schenkel (43, 43') eines anderen Rastmittels (4, 4') einteilig verbunden und somit die zumindest zwei Rastmittel (4, 4') einteilig ausgeführt sind.

7. Verriegelungsvorrichtung (1) nach einem der Ansprüche 1 bis 6, **dadurch gekennzeichnet, dass**
die Rastmittel (4, 4') aus einem federnden Draht gebildet werden.

8. Verriegelungsvorrichtung (1) nach einem der vorstehenden Ansprüche,
**dadurch gekennzeichnet, dass**
die Keilflächen (24) radial zur Steckverbinder-Mittelachse ausgerichtet sind.

9. Verriegelungsvorrichtung (1) nach einem der vorstehenden Ansprüche,
**dadurch gekennzeichnet, dass**
die abgewinkelten Bereiche (44) der Rastmittel (4, 4') jeweils einer Keilflächen (24) zugeordnet sind.

10. Verriegelungsvorrichtung (1) nach einem der Ansprüche 1 bis 9, **dadurch gekennzeichnet, dass**
die ersten Schenkel (41, 41') und die zweiten Schenkel (43, 43') der Rastmittel (4, 4') in den abgewinkelten Bereichen (44) voneinander weg laufen, so dass die Rastmittel (4, 4') in den abgewinkelten Bereichen (44) breiter ausgebildet sind als die Schenkel (41, 41', 43, 43') zueinander und jeweils einen ausladenden Bogen (45) bilden.

## Claims

1. Locking apparatus (1) for plug connectors, consisting of at least one first locking half (2) and at least one second locking half (3), wherein the first locking half (2) is formed from an inner sleeve (21) and an outer sleeve (22), wherein the outer sleeve (22) is linearly displaceable relative to the inner sleeve (21) against a plug-in direction (S), wherein the second locking half (3) is formed from a further sleeve (31), which can be inserted into the inner sleeve (21) of the first locking half (2),
and
wherein the first locking half (2) is associated with at least one detent means (4), which acts on an inserted sleeve (31) through at least one detent opening (23) in the inner sleeve (21),
**characterized in that** the detent means (4) substantially has a U-shape, which is formed from a first limb (41), a base (42) and a second limb (43), wherein the first limb (41) and the second limb (43) are each connected to the base (42) via a bent region (44),
**in that** the first limbs (41, 41') of at least two detent means (4, 4') are each connected to a respective one of the second limbs (43, 43') of another detent means (4, 4'), and
**in that** the bases (42, 42') of the detent means (4, 4') are designed to be insertable into the detent opening (23) and to reach as far as the inner side of the inner sleeve (21), as a result of which the detent means (4, 4') can engage in the second locking half (3), and
**in that** the outer sleeve (22) has wedge surfaces (24) formed integrally on the inner side, wherein the wedge surfaces (24) are arranged at an angle between 0 and 90 degrees to the plug-in direction (S),
**in that** the wedge surfaces (24) act on the detent means (4, 4'), and therefore the locking between the first locking half (2) and the second locking half (3) is releasable,
**in that** the wedge surfaces (24) can each be associated with a sweeping curve (45, 45') of the detent means (4, 4'),
**in that** the detent means (4, 4') are movable outwards by the wedge surfaces (24), by displacement of the outer sleeve (22) against the plug-in direction (S).

2. Locking apparatus (1) according to Claim 1,
**characterized in that**
the bases (42, 42') of the detent means (4, 4') engage with a detent recess (32) in the sleeve (31).

3. Locking apparatus (1) according to Claim 2,
**characterized in that**
the detent recess (32) and the bases (42, 42') are oriented transversely to the plug-in direction (S).

4. Locking apparatus (1) according to one of Claims 1 to 3,
**characterized in that**
the detent means (4, 4') are adapted to the form of the inner sleeve (21).

5. Locking apparatus (1) according to one of Claims 1 to 4, **characterized in that**
the first limbs (41, 41') and the second limbs (43, 43') are fixed to the inner sleeve (21).

6. Locking apparatus (1) according to one of the preceding claims, **characterized in that** the first limbs (41, 41') of the at least two detent means (4, 4') are each connected in one piece to a respective one of the second limbs (43, 43') of another detent means (4, 4'), and the at least two detent means (4, 4') are thus formed in one piece.

7. Locking apparatus (1) according to one of Claims 1 to 6, **characterized in that**
the detent means (4, 4') are formed from a resilient wire.

8. Locking, apparatus (1) according to one of the preceding claims, **characterized in that** the wedge surfaces (24) are oriented radially to the plug connector center axis.

9. Locking apparatus (1) according to one of the preceding claims, **characterized in that** the bent regions (44) of the detent means (4, 4') are each associated with a wedge surface (24).

10. Locking apparatus (1) as claimed one of Claims 1 to 9, **characterized in that**
the first limbs (41, 41') and the second limbs (43, 43') of the detent means (4, 4') extend away from one another in the bent regions (44), such that the detent means (4, 4') are wider in the bent regions (44) than the limbs (41, 41', 43, 43') to one another and in each case form a sweeping curve (45).

## Revendications

1. Ensemble de verrouillage (1) pour fiche de raccordement, constitué d'au moins une première moitié de verrouillage (2) et d'au moins une deuxième moitié de verrouillage (3), la première moitié de verrouillage (2) étant formée d'une douille intérieure (21) et d'une douille extérieure (22), la douille extérieure (22) pouvant coulisser linéairement vers la douille intérieure (21) dans une direction opposée à la direction d'enfichage (S),
la deuxième moitié de verrouillage (3) étant formée d'une autre douille (31) qui peut être enfichée dans la douille intérieure (21) de la première moitié de verrouillage (2),
au moins un moyen d'encliquetage (4) étant associé à la première moitié de verrouillage (2) et agissant sur une douille (31) enfichée par au moins une ouverture d'encliquetage (23) ménagée dans la douille intérieure (21),
**caractérisé en ce que**
le moyen d'encliquetage (4) présente essentiellement la forme d'un U formé d'une première branche (41), d'une base (42) et d'une deuxième branche (43), la première branche (41) ainsi que deuxième branche (43) étant reliées à la base (42) par une partie coudée (44),
**en ce que** chacune des premières branches (41, 41') d'au moins deux moyens d'encliquetage (4, 4') est reliée à une deuxième branche (43, 43') d'un autre moyen d'encliquetage (4, 4'),
**en ce que** la base (42, 42') des moyens d'encliquetage (4, 4') peut être insérée dans l'ouverture d'encliquetage (23) et est configurée pour atteindre le côté intérieur de la douille intérieure (21), grâce à quoi les moyens d'encliquetage (4, 4') peuvent s'engager dans la deuxième moitié de verrouillage (3) et
**en ce que** la douille extérieure (22) présente sur son côté intérieur des surfaces de biseau (24), les surfaces de biseau (24) étant disposés à un angle compris entre 0 et 90 degrés par rapport à la direction d'enfichage (S),
**en ce que** les surfaces de biseau (24) agissent sur les moyens d'encliquetage (4, 4') et libèrent ainsi le verrouillage entre la première moitié de verrouillage (2) et la deuxième moitié de verrouillage (3),
**en ce que** chacune des surfaces de biseau (24) peut être associée à un arc (45, 45') de délestage des moyens d'encliquetage (4, 4'),
**en ce que** par coulissement de la douille extérieure (22), les moyens d'encliquetage (4, 4') peuvent être déplacés vers l'extérieur par les surfaces de biseau (24), en opposition à la direction d'enfichage (S).

2. Ensemble de verrouillage (1) selon la revendication 1, **caractérisé en ce que** la base (42, 42') des moyens d'encliquetage (4, 4') s'engage dans une découpe d'encliquetage (32) ménagée dans la douille (31) .

3. Ensemble de verrouillage (1) selon la revendication 2, **caractérisé en ce que** la découpe d'encliquetage (32) et la base (42, 42') sont orientées transversalement par rapport à la direction d'enfichage (S).

4. Ensemble de verrouillage (1) selon l'une des revendications 1 à 3, **caractérisé en ce que** les moyens d'encliquetage (4, 4') sont adaptés à la forme de la douille intérieure (21).

5. Ensemble de verrouillage (1) selon l'une des revendications 1 à 4, **caractérisé en ce que** les premières branches (41, 41') et les deuxièmes branches (43, 43') sont fixées sur la douille intérieure (21).

6. Ensemble de verrouillage (1) selon l'une des revendications précédentes, **caractérisé en ce que** chacune des premières branches (41, 41') des deux ou plusieurs moyens d'encliquetage (4, 4') est reliée d'une seule pièce à une deuxième branche (43, 43') d'un autre moyens d'encliquetage (4, 4'), les deux ou plusieurs moyens d'encliquetage (4, 4') étant ainsi réalisés d'une seule pièce.

7. Ensemble de verrouillage (1) selon l'une des revendications 1 à 6, **caractérisé en ce que** les moyens d'encliquetage (4, 4') sont formés d'un fil élastique.

8. Ensemble de verrouillage (1) selon l'une des revendications précédentes, **caractérisé en ce que** les surfaces de biseau (24) sont orientés radialement par rapport à l'axe central de la fiche de raccordement.

9. Ensemble de verrouillage (1) selon l'une des revendications précédentes, **caractérisé en ce que** chacune des parties coudées (44) des moyens d'encliquetage (4, 4') est associée à une surface de biseau (24).

10. Ensemble de verrouillage (1) selon l'une des revendications 1 à 9, **caractérisé en ce que** dans les .parties coudées (44), les premières branches (41, 41') et les deuxièmes branches (43, 43') des moyens d'encliquetage (4, 4') s'éloignent l'une de l'autre de telle sorte que dans les parties coudées (44), les moyens d'encliquetage (4, 4') sont plus larges que l'écartement mutuel entre les branches (41, 41', 43, 43') et forment chaque fois un arc (45) de délestage.
